# EUROPEAN PATENT APPLICATION

(11) **EP 4 712 124 A1**
(43) Date of publication of application: **18.03.2026**
(21) Application number: 25306413.3
(22) Date of filing: 08.09.2025
(51) Int. Cl.: H01H 83/04, H02H 3/04, H02H 3/32

(54) **CIRCUIT BREAKER**

(30) Priority: 12.09.2024 CN 202422242220 U
(71) Applicant: SCHNEIDER ELECTRIC INDUSTRIES SAS, 92500 Rueil-Malmaison (FR)
(72) Inventor: GONG, Zhenyao, Shanghai, 201203 (CN); XIA, Xuedong, Shanghai, 201203 (CN); TIAN, Simon, Shanghai, 201203 (CN); DOMEJEAN, Eric, 38320 Eybens (FR); HE, Xiatian, Shanghai, 201203 (CN)
(74) Representative: Manitz Finsterwald Patent- und Rechtsanwaltspartnerschaft mbB

(57) **Abstract**

Embodiments of the disclosure provide a circuit breaker. Each of a first switch module and a second switch module of the circuit breaker includes a driving component, a plurality of connecting members coupled to the driving component, and a plurality of first contacts and a plurality of second contacts disposed corresponding to the plurality of connecting members. A circuit board assembly is electrically connected to the driving component of the first switch module and the driving component of the second switch module. A test button assembly is disposed on the circuit board assembly.

## Description

### FIELD

Embodiments of the present disclosure generally relate to the field of electrical equipment, and in particular, to a circuit breaker.

### BACKGROUND

A leakage protection unit in a circuit breaker is able to respond quickly when a leakage occurs in an electric line, and potential safety hazards are avoided by cutting off current. The leakage protection unit is usually provided with a test function, allowing a user to periodically check the state of a leakage switch. In a conventional leakage protection unit, after a user presses a test button, a leakage switch immediately trips, thereby verifying the validity of its protection mechanism. However, this method may cause circuit interruption, thereby affecting the stability of the power system and causing economic losses.

### SUMMARY

An object of embodiments of the present disclosure is to provide a circuit breaker to at least partially solve the above problems and other potential problems.

The present disclosure provides a circuit breaker. The circuit breaker includes: a first switch module and a second switch module, a circuit board assembly, and a test button assembly. Each switch module includes a driving component, a plurality of connecting members coupled to the driving component, and a plurality of first contacts and a plurality of second contacts disposed corresponding to the plurality of connecting members. The driving component is adapted to drive the plurality of connecting members to respectively contact or separate from the plurality of first contacts and the plurality of second contacts. The circuit board assembly is electrically connected to the driving component of the first switch module and the driving component of the second switch module. The test button assembly is disposed on the circuit board assembly, the test button assembly and the circuit board assembly are adapted to control the driving component of the first switch module and the driving component of the second switch module to operate, so that at least one of the first switch module and the second switch module is turned on during testing.

In some embodiments, the plurality of second contacts of the second switch module are electrically connected to the plurality of second contacts of the first switch module, respectively. The circuit breaker further includes: a plurality of first wiring terminals electrically connected to the plurality of first contacts of the first switch module and the plurality of first contacts of the second switch module, respectively; a plurality of second wiring terminals electrically connected to the plurality of second contacts of the first switch module, respectively; and a current transformer electrically connected to the circuit board assembly and adapted to detect incoming and outgoing currents between the plurality of second contacts of the first switch module and the plurality of second wiring terminals.

In some embodiments, the circuit board assembly includes: a first circuit board electrically connected to the current transformer and the test button assembly; and a second circuit board electrically connected to the first circuit board, the driving component of the first switch module and the driving component of the second switch module.

In some embodiments, the circuit breaker further includes: a first position detection assembly coupled to the first switch module and electrically connected to the first circuit board, the first position detection assembly being adapted to detect positions of the plurality of connecting members of the first switch module; and a second position detection assembly coupled to the second switch module and electrically connected to the first circuit board, the second position detection assembly being adapted to detect positions of the plurality of connecting members of the second switch module.

In some embodiments, each of the first switch module and the second switch module further includes a moving part coupled to the plurality of connecting members; each of the first position detection assembly and the second position detection assembly includes a third circuit board and a micro switch disposed on the third circuit board, the third circuit board is electrically connected to the first circuit board, and the micro switch is adapted to detect a position of a corresponding moving part.

In some embodiments, the circuit breaker further includes: a plurality of solid-state switch units electrically connected to the plurality of second contacts of the first switch module and the plurality of second wiring terminals, respectively.

In some embodiments, the circuit breaker further includes: a supporting member supporting the first switch module and the second switch module.

In some embodiments, the circuit breaker further includes: a heat dissipation member located on a side of the plurality of solid-state switch units away from the supporting member and coupled to the supporting member; and an insulating member disposed between the heat dissipation member and the plurality of solid-state switch units.

In some embodiments, a plurality of ribs are provided on a side of the supporting memeber facing the plurality of solid-state switch units, and the plurality of ribs abut against the plurality of solid-state switch units, so that the plurality of solid-state switch units abut against the insulating member.

In some embodiments, the circuit breaker further includes: a housing disposed around the first switch module, the second switch module, the plurality of first wiring terminals, and the plurality of second wiring terminals, and including a plurality of first through holes, a plurality of second through holes, and a third through hole, the plurality of first through holes corresponding to positions of the plurality of first wiring terminals, the plurality of second through holes corresponding to positions of the plurality of second wiring terminals, and the test button assembly passing through the third through hole.

In some embodiments, the driving component of the first switch module includes an operation part for a user to operate, and the housing further includes a fourth through hole through which the operation part passes.

In embodiments of the present disclosure, the circuit breaker includes a first switch module, a second switch module, a circuit board assembly, and a test button assembly. Each of the first switch module and the second switch module includes a driving component, a plurality of connecting members coupled to the driving component, and a plurality of first contacts and a plurality of second contacts disposed corresponding to the plurality of connecting members, and the driving component is adapted to drive the plurality of connecting members to respectively contact or separate from the plurality of first contacts and the plurality of second contacts. The circuit board assembly is electrically connected to the driving component of the first switch module and the driving component of the second switch module. The test button assembly is disposed on the circuit board assembly, and the test button assembly and the circuit board assembly are adapted to control the driving component of the first switch module and the driving component of the second switch module to operate, so that at least one of the first switch module and the second switch module is turned on during testing. With this arrangement, when a user tests the leakage protection function of the circuit breaker, the second switch module may be controlled to be turned on before the first switch module is turned off, and then whether the first switch module may be normally turned off during leakage is tested. After the test is completed, the first switch module is controlled to return to an on state, and the second switch module returns to an off state. When the circuit breaker performs a leakage protection function test, the entire circuit will not be powered off, so that the stability of the power system is improved.

It should be understood that content described in this content section is not intended to limit key features or important features of embodiments of the present disclosure, nor is it intended to limit the scope of the present disclosure. Other features of the present disclosure will be readily understood from the following description.

### BRIEF DESCRIPTION OF DRAWINGS

The above and other features, advantages and aspects of embodiments of the present disclosure will become more apparent with reference to the following detailed description taken in conjunction with the accompanying drawings. In the drawings, the same or similar reference numerals denote the same or similar elements, wherein:
FIG. 1 shows a perspective schematic diagram of a circuit breaker according to embodiments of the present disclosure, where a housing is not shown;
FIG. 2 shows a perspective schematic diagram of a circuit breaker according to embodiments of the present disclosure, where first contacts, second contacts, and connecting members are shown;
FIG. 3a shows a schematic diagram of a circuit connection relationship when a circuit breaker according to embodiments of the present disclosure is in an initial state, where a first switch module is in a closing position, and a second switch module is in an opening position;
FIG. 3b shows a schematic diagram of a circuit connection relationship when a circuit breaker according to embodiments of the present disclosure is in a test process, where a first switch module is in a closing position, and a second switch module is also in a closing position;
FIG. 3c shows a schematic diagram of a circuit connection relationship when a circuit breaker according to embodiments of the present disclosure is in a test process, where a first switch module is in an opening position, and a second switch module is in a closing position;
FIG. 3d shows a schematic diagram of a circuit connection relationship when a circuit breaker according to embodiments of the present disclosure is in a test completion state, where a first switch module is in a closing position, and a second switch module is in a closing position;
FIG. 3e shows a schematic diagram of a circuit connection relationship when a circuit breaker according to embodiments of the present disclosure is returned to an initial state, where a first switch module is in a closing position, and a second switch module is in an opening position;
FIG. 4 shows a circuit schematic diagram of a circuit breaker according to embodiments of the present disclosure;
FIG. 5 shows a perspective schematic diagram of a circuit breaker according to embodiments of the present disclosure, where a first position detection assembly and a second position detection assembly are shown;
FIG. 6 shows a perspective schematic diagram of a circuit breaker according to embodiments of the present disclosure, where solid-state switch units are shown; and
FIG. 7 shows a perspective schematic diagram of a circuit breaker according to embodiments of the present disclosure, where a housing is shown.

### Description of Reference Numerals:

100 circuit breaker;
10a first switch module; 10b second switch module; 11 first contact; 12 second contact; 13 driving component; 131 operation part; 14 moving part; 15 connecting member;
20 wire; 21 first wiring terminal; 22 second wiring terminal;
30 current transformer;
40 test button assembly;
50 circuit board assembly; 51 first circuit board; 52 second circuit board;
60a: first position detection assembly; 60b: second position detection assembly; 61: third circuit board; 62: micro switch;
70 solid-state switch unit;
80 supporting member; 81 rib;
90 housing; 91 first through hole; 92 second through hole; 93 third through hole; 94 fourth through hole.

### DETAILED DESCRIPTION

Embodiments of the present disclosure will be described in more detail below with reference to the accompanying drawings. Although the embodiments of the present disclosure are shown in the drawings, it should be understood that the present disclosure may be implemented in various forms and should not be limited by the embodiments set forth herein. Rather, these embodiments are provided to make the present disclosure more thorough and complete, and can fully convey the scope of the present disclosure to those skilled in the art.

As used herein, the term "including" and variations thereof means open inclusive, i.e., "including but not limited to". Unless specifically stated, the term "or" means "and/or". The term "based on" means "based at least in part on". The terms "an example embodiment" and "an embodiment" mean "at least one example embodiment". The term "another embodiment" means "at least one further embodiment". The terms "first", "second", and the like may refer to different or identical objects.

As described above, in a conventional leakage protection unit, after a user presses a test button, a leakage switch immediately trips, thereby verifying the validity of its protection mechanism. However, this method may cause circuit interruption, thereby affecting the stability of the power system and causing economic losses.

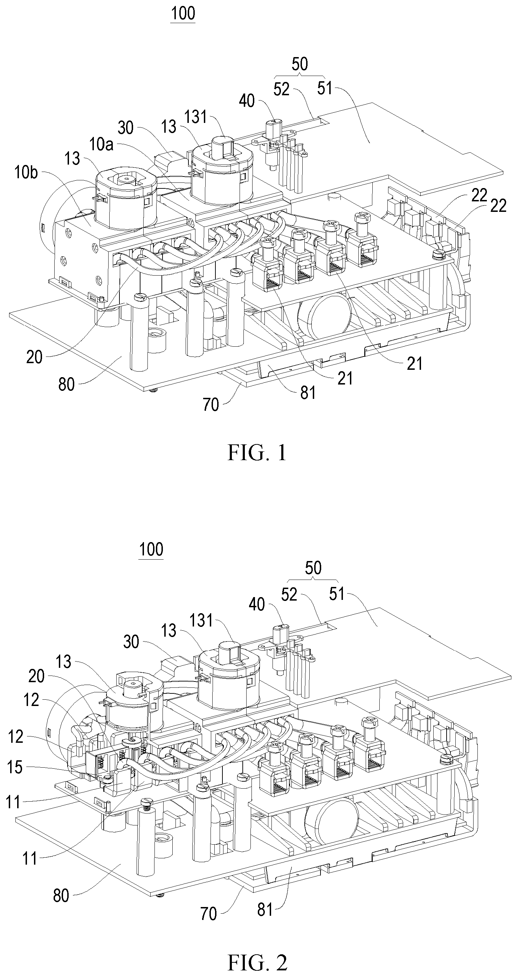

Embodiments of the present disclosure provide a circuit breaker. In the circuit breaker, a circuit board assembly is electrically connected to a driving component of a first switch module and a driving component of a second switch module. A test button assembly is disposed on the circuit board assembly, and the test button assembly and the circuit board assembly are adapted to control the driving component of the first switch module and the driving component of the second switch module to operate, so that at least one of the first switch module and the second switch module is turned on during testing. With this arrangement, when a user tests the leakage protection function of the circuit breaker, the second switch module may be controlled to be turned on before the first switch module is turned off, and then whether the first switch module may be normally turned off during leakage is tested. When the circuit breaker performs a leakage protection function test, the entire circuit will not be powered off, so that the stability of the power system is improved. The principles of the present disclosure will be described in detail below with reference to FIGS. 1 to 7.

As shown in FIGS. 1 and 2, a circuit breaker 100 includes a first switch module 10a and a second switch module 10b. The first switch module 10a and the second switch module 10b each can be independently switched between an on state and an off state. Each of the first switch module 10a and the second switch module 10b includes a driving component 13, a plurality of connecting members 15, a plurality of first contacts 11, and a plurality of second contacts 12. The driving component 13 is coupled to the plurality of connecting members 15. For example, the plurality of connecting members 15 are mounted at a driving end of the driving component 13 through a fixing structure.

As an example, as shown in FIGS. 1 and 2, each of the first switch module 10a and the second switch module 10b includes four first contacts 11, four second contacts 12, and four connecting members 15. The four first contacts 11 and the four second contacts 12 are used to electrically connect to three-phase power lines and a neutral line, respectively. The four connecting members 15 are disposed corresponding to the four first contacts 11 and the four second contacts 12. The four connecting members 15 may contact or separate from the four first contacts 11 and the four second contacts 12 under an action of the driving component 13.

When the connecting members 15 contact the first contacts 11 and the second contacts 12, the switch module is switched to the on state. When the connecting members 15 are separated from the first contacts 11 and the second contacts 12, the switch module is switched to the off state.

As shown in FIGS. 1 and 2, the circuit breaker 100 further includes a circuit board assembly 50. The circuit board assembly 50 is electrically connected to the driving component 13 of the first switch module 10a and the driving component 13 of the second switch module 10b. The circuit board assembly 50 integrates a signal detection function and a driving function. When a leakage signal is detected, the driving component 13 of the first switch module 10a and the driving component 13 of the second switch module 10b may be controlled to operate in a predetermined sequence.

As shown in FIGS. 1 and 2, the test button assembly 40 is disposed on the circuit board assembly 50. When a user operates the test button assembly 40, the test button assembly 40 and the circuit board assembly 50 are adapted to control the driving component 13 of the first switch module 10a and the driving component 13 of the second switch module 10b to operate.

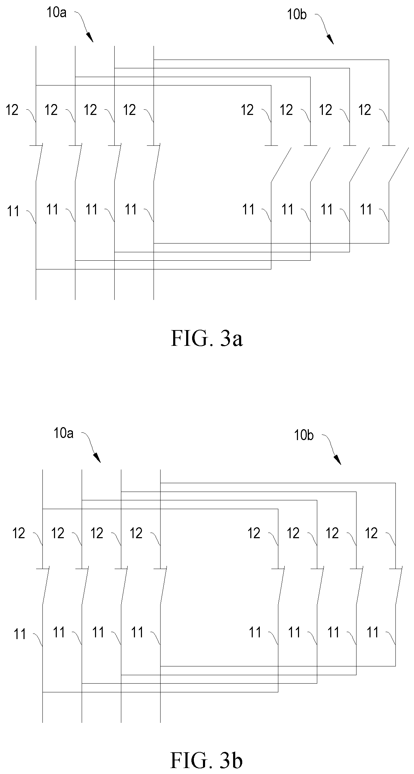

The operation process of the driving component 13 of the first switch module 10a and the driving component 13 of the second switch module 10b in some embodiments of the present disclosure will be described in detail below with reference to FIGS. 3a to 3e.

As shown in FIG. 3a, when the circuit breaker 100 is in an initial state, the plurality of connecting members 15 of the first switch module 10a contact the plurality of first contacts 11 and the plurality of second contacts 12, and the plurality of connecting members 15 of the second switch module 10b are separated from the plurality of first contacts 11 and the plurality of second contacts 12. At this point, the first switch module 10a serves as a main mechanism to ensure the conduction of the circuit.

As shown in FIG. 3b, when the user operates the test button assembly 40, the plurality of connecting members 15 of the first switch module 10a remain in contact with the plurality of first contacts 11 and the plurality of second contacts 12, and the plurality of connecting members 15 of the second switch module 10b contact the plurality of first contacts 11 and the plurality of second contacts 12. At this point, the first switch module 10a and the second switch module 10b may make the circuit conduct simultaneously.

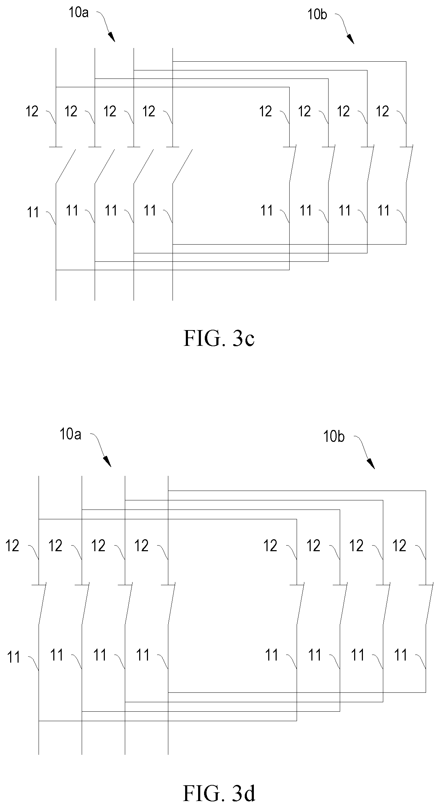

As shown in FIG. 3c, after the connecting members 15 of the second switch module 10b contact the first contacts 11 and the second contacts 12, the connecting members 15 of the first switch module 10a are separated from the first contacts 11 and the second contacts 12. At this point, the second switch module 10b serves as a slave mechanism to ensure the conduction of the circuit.

As shown in FIG. 3d, after the leakage test completes, the plurality of connecting members 15 of the first switch module 10acontact the plurality of first contacts 11 and the plurality of second contacts 12, and the plurality of connecting members 15 of the second switch module 10b remain in contact with the plurality of first contacts 11 and the plurality of second contacts 12. At this point, the first switch module 10a and the second switch module 10b may make the circuit conduct simultaneously.

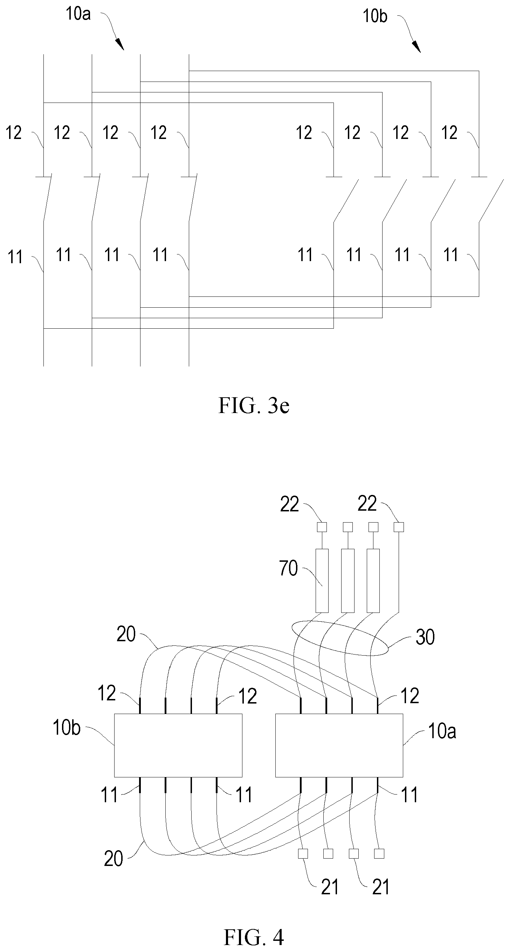

As shown in FIG. 3e, the circuit breaker 100 returns to the initial state, the plurality of connecting members 15 of the first switch module 10a contact the plurality of first contacts 11 and the plurality of second contacts 12, and the plurality of connecting members 15 of the second switch module 10b are separated from the plurality of first contacts 11 and the plurality of second contacts 12.

With this arrangement, when the user tests the leakage protection function of the circuit breaker 100, the second switch module 10b may be controlled to be turned on before the first switch module 10a is turned off, and then whether the first switch module 10a may be normally turned off during leakage is tested. After the test is completed, the first switch module 10a may be controlled to return to the on state, and the second switch module 10b may return to the off state. When the circuit breaker 100 performs the leakage protection function test, the entire circuit will not be powered off, so that the stability of the power system is improved.

In some embodiments, as shown in FIGS. 1, 2 and 4, the circuit breaker 100 further includes a plurality of first wiring terminals 21, a plurality of second wiring terminals 22, and a current transformer 30.

As shown in FIGS. 1 and 2, the plurality of second contacts 12 of the second switch module 10b are electrically connected to the plurality of second contacts 12 of the first switch module 10a, respectively. The plurality of first wiring terminals 21 are electrically connected to the plurality of first contacts 11 of the first switch module 10a and the plurality of first contacts 11 of the second switch module 10b, respectively. The plurality of second wiring terminals 22 are electrically connected to the plurality of second contacts 12 of the first switch module 10a, respectively. The current transformer 30 is electrically connected to the circuit board assembly 50 and is adapted to detect incoming and outgoing currents between the plurality of second contacts 12 of the first switch module 10a and the plurality of second wiring terminals 22.

With this arrangement, the current of the first switch module 10a and the current of the second switch module 10b converge at the plurality of second contacts 12 of the first switch module 10a. Current flows between the plurality of second contacts 12 of the first switch module 10a and the plurality of second wiring terminals 22. If a leakage occurs in any circuit, a difference will occur between the incoming and outgoing currents detected by the current transformer 30, thereby generating a leakage signal. After the circuit board assembly 50 detects the leakage signal, the driving component 13 of the first switch module 10a and the driving component 13 of the second switch module 10b may be controlled to cut off the circuit, and thus making a rapid response when a leakage occurs in an electric line, so as to avoid potential safety hazards by cutting off current.

In some embodiments, as shown in FIGS. 1 and 2, the circuit board assembly 50 includes a first circuit board 51 and a second circuit board 52. The first circuit board 51 is electrically connected to the current transformer 30 and the test button assembly 40. The second circuit board 52 is electrically connected to the first circuit board 51, the driving component 13 of the first switch module 10a and the driving component 13 of the second switch module 10b.

As shown in FIG. 1 and FIG. 2, the first circuit board 51 is mainly configured to monitor current changes in the circuit in real time. For example, the current transformer 30 may sense the current in the main circuit and convert it into a measurable signal and transmit it to the first circuit board 51. A circuit on the first circuit board 51 may identify the signal from the current transformer 30 and determine whether there is a leakage phenomenon. In addition, the first circuit board 51 is further provided with the test button assembly 40, and by pressing a test button, the leakage condition can be simulated for checking the validity of the entire leakage protection system.

The second circuit board 52 is electrically connected to the first circuit board 51, and is also electrically connected to the driving component 13 of the first switch module 10a and the driving component 13 of the second switch module 10b. The second circuit board 52 may receive a control signal sent by the first circuit board 51, and send a corresponding control signal to the driving component 13 of the first switch module 10a and the driving component 13 of the second switch module 10b according to the control signal.

With this arrangement, when the first circuit board 51 detects a leakage signal, the first circuit board 51 generates a control signal, which is transmitted to the second circuit board 52. After receiving the control signal, the second circuit board 52 controls the driving components 13 in the first switch module 10a and the second switch module 10b to operate according to a predetermined logic. Upon detecting a leakage, the circuit breaker 100 is able to quickly and efficiently cut off power, thereby protecting the circuit from damage. Meanwhile, when the leakage protection function is tested, the circuit breaker 100 may further ensure continuous power supply of the circuit.

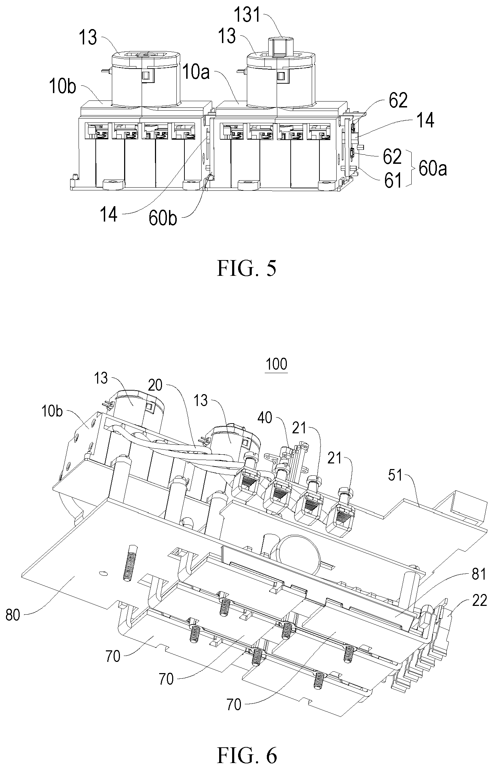

In some embodiments, as shown in FIG. 5, the circuit breaker 100 further includes a first position detection assembly 60a and a second position detection assembly 60b. The first position detection component 60a is coupled to the first switch module 10a and electrically connected to the first circuit board 51, and the first position detection component 60a is adapted to detect positions of the plurality of connecting members 15 of the first switch module 10a. The second position detection component 60b is coupled to the second switch module 10b and electrically connected to the first circuit board 51, and the second position detection component 60b is adapted to detect positions of the plurality of connecting members 15 of the second switch module 10b.

As an example, as shown in FIG. 5, buckles may be disposed on outer sidewalls of the first switch module 10a and the second switch module 10b. The first position detection assembly 60a and the second position detection assembly 60b may be mounted on corresponding switch modules through buckle structures. When the driving component 13 drives the plurality of connecting members 15 to move, the position detection assembly may determine that the plurality of connecting members 15, the plurality of first contacts 11, and the plurality of second contacts 12 are in a contact state or in a separation state. The first position detection assembly 60a and the second position detection assembly 60b may feed back the position states of corresponding plurality of connecting members 15 to the first circuit board 51, and the first circuit board 51 may control the driving component 13 of the first switch module 10a and the driving component 13 of the second switch module 10b to operate according to the received position signals.

As another example, the first position detection assembly 60a and the second position detection assembly 60b may be mounted on corresponding switch modules through bolt structures. It should be understood that the first position detection component 60a and the second position detection component 60b may be mounted on the switch modules in any other implementable manner, which is not intended to be limited in the present disclosure.

In some embodiments, as shown in FIG. 5, each of the first switch module 10a and the second switch module 10b further includes a moving part 14 coupled to the plurality of connecting members 15. Through holes are provided on side walls of the first switch module 10a and the second switch module 10b, and moving parts 14 pass through the through holes and extend to outer side of the switch modules.

As shown in FIG. 5, each of the first position detection assembly 60a and the second position detection assembly 60b includes a third circuit board 61 and a micro switch 62 disposed on the third circuit board 61. The third circuit board 61 is electrically connected to the first circuit board 51. The micro switch 62 may detect a position of a corresponding moving part 14.

With this arrangement, the micro switch 62 may detect the position of the moving part 14 and generate a corresponding position signal, thereby determining whether the plurality of connecting members 15 are in contact with or separated from the plurality of first contacts 11 and the plurality of second contacts 12. The first circuit board 51 may control the driving component 13 of the first switch module 10a and the driving component 13 of the second switch module 10b to operate according to the received position signal.

As an example, as shown in FIG. 5, two micro switches 62 are disposed on the third circuit board 61. One of the two micro switches 62 is configured to detect whether the plurality of connecting members 15 contact the plurality of first contacts 11 and the plurality of second contacts 12, and the other of the two micro switches 62 is configured to detect whether the plurality of connecting members 15 are separated from the plurality of first contacts 11 and the plurality of second contacts 12. With this arrangement, even if one of the micro switches 62 malfunctions or fails, the other micro switch 62 can still continue to work, thereby increasing the reliability and safety of the system. Secondly, the two micro switches 62 are disposed at different positions, one micro switch may be used as a main detection point, and the other micro switch may be used as an auxiliary or calibration point, jointly ensuring the accuracy of position detection.

In some embodiments, as shown in FIG. 6, the circuit breaker 100 further includes a plurality of solid-state switching units 70. The plurality of solid-state switch units 70 are electrically connected to the plurality of second contacts 12 of the first switch module 10a and the plurality of second wiring terminals 22, respectively. With this arrangement, the solid-state switch units 70 may act quickly when a leakage or an overload is detected, thereby effectively protecting the safety of circuits and devices. The solid-state switches have no mechanical contact, so that the failure rate caused by abrasion can be reduced, and the service life is prolonged.

As an example, when the circuit breaker 100 performs leakage protection, the plurality of solid-state switch units 70 should be turned off before the first switch module 10a and the second switch module 10b are turned off, thereby avoiding damage to electronic components caused by arcs generated during opening and closing.

As another example, the circuit breaker 100 may further include a component and a circuit for extinguishing the arc, such as an arc extinguishing chamber, a vacuum chamber, a suppression circuit, or a buffer circuit. In this way, the damage to the electronic components caused by arcs generated during opening and closing may be avoided.

In some embodiments, as shown in FIG. 6, the circuit breaker 100 further includes a supporting member 80. The supporting member 80 may provide a stable support for the first switch module 10a and the second switch module 10b, ensuring that the first switch module 10a and the second switch module 10b may maintain stable positions during operation.

In some embodiments, the circuit breaker 100 further includes a heat dissipation member and an insulating member. The heat dissipation member is located on a side of the plurality of solid-state switch units 70 away from the supporting member 80 and connected to the support 80. The heat generated by the solid-state switch units 70 during working may be conducted to the heat dissipation member, and then dissipated to the surrounding environment through the heat dissipation member. The heat dissipation member may maintain the working temperature of the solid-state switch units 70 within a reasonable range, preventing performance degradation or damage caused by overheating. The insulating member is disposed between the heat dissipation member and the plurality of solid-state switch units 70, and the insulating member may prevent the current of the solid-state switch units 70 from leaking to the heat dissipation member. The heat conduction efficiency of the heat dissipation member is not affected while electrical isolation is ensured, so that good thermal management and electrical safety performance are achieved.

In some embodiments, as shown in FIG. 6, a plurality of ribs 81 are provided on a side of the supporting member 80 facing the plurality of solid-state switch units 70. The plurality of ribs 81 abut against the plurality of solid-state switch units 70. With this arrangement, the ribs 81 may not only assist the solid-state switch units 70 in mounting and aligning, but also apply a moderate pressure to make the solid-state switch units 70 closely fit on the insulating member, thereby enhancing the contact stability and thermal conductivity between the solid state switch units 70 and the insulating member.

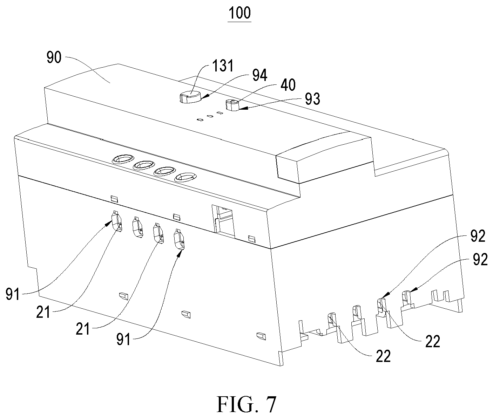

In some embodiments, as shown in FIG. 7, the circuit breaker 100 further includes a housing 90. The housing 90 is disposed around the first switch module 10a, the second switch module 10b, the plurality of first wiring terminals 21, and the plurality of second wiring terminals 22. Meanwhile, a plurality of first through holes 91, a plurality of second through holes 92, and a third through hole 93 are provided on the housing 90. The positions of the plurality of first through holes 91 are in one-to-one correspondence with the plurality of first wiring terminals 21, so that the external wires 20 may be conveniently connected to the first wiring terminals 21 through the plurality of first through holes 91. Similarly, the plurality of second through holes 92 are disposed at positions corresponding to the plurality of second wiring terminals 22, which may ensure that another group of wires 20 may be connected to corresponding second wiring terminals 22. Further, the third through-hole 93 is reserved on the housing 90 for installation of the test button assembly 40. The test button assembly 40 extends outside of the housing 90 after passing through the third through hole 93, allowing an operator to conveniently test the leakage protection function at any time.

In some embodiments, as shown in FIG. 7, the driving component 13 of the first switch module 10a is provided with an operation part 131 for the user to operate, and the operation part 131 may extend outside of the housing 90 through a fourth through hole 94 on the housing 90. With this arrangement, the user may control the state of the first switch module 10a through the operation part 131, so as to control the on-off state of the circuit manually in the event of an emergency.

Embodiments of the present disclosure have been described above, and the above description is illustratively, not exhaustive, and is not limited to the disclosed embodiments. Many modifications and variations will be apparent to those of ordinary skill in the art without departing from the scope of the illustrated embodiments. The selection of terms as used herein is intended to best explain the principles of the embodiments, the practical application or technical improvements to the market, or to enable others of ordinary skill in the art to understand the embodiments disclosed herein.

## Claims

1. A circuit breaker (100), **characterized by** comprising:
a first switch module (10a) and a second switch module (10b), each switch module comprising a driving component (13), a plurality of connecting members (15) coupled to the driving component (13), and a plurality of first contacts (11) and a plurality of second contacts (12) disposed corresponding to the plurality of connecting members (15), wherein the driving component (13) is adapted to drive the plurality of connecting members (15) to respectively contact or separate from the plurality of first contacts (11) and the plurality of second contacts (12);
a circuit board assembly (50) electrically connected to the driving component (13) of the first switch module (10a) and the driving component (13) of the second switch module (10b); and
a test button assembly (40) disposed on the circuit board assembly (50), wherein the test button assembly (40) and the circuit board assembly (50) are adapted to control the driving component (13) of the first switch module (10a) and the driving component (13) of the second switch module (10b) to operate, so that at least one of the first switch module (10a) and the second switch module (10b) is turned on during testing.

2. The circuit breaker (100) according to claim 1, **characterized in that** the plurality of second contacts (12) of the second switch module (10b) are electrically connected to the plurality of second contacts (12) of the first switch module (10a), respectively, and the circuit breaker (100) further comprises:
a plurality of first wiring terminals (21) electrically connected to the plurality of first contacts (11) of the first switch module (10a) and the plurality of first contacts (11) of the second switch module (10b), respectively;
a plurality of second wiring terminals (22) electrically connected to the plurality of second contacts (12) of the first switch module (10a), respectively; and
a current transformer (30) electrically connected to the circuit board assembly (50) and adapted to detect incoming and outgoing currents between the plurality of second contacts (12) of the first switch module (10a) and the plurality of second wiring terminals (22).

3. The circuit breaker (100) according to claim 2, **characterized in that** the circuit board assembly (50) comprises:
a first circuit board (51) electrically connected to the current transformer (30) and the test button assembly (40); and
a second circuit board (52) electrically connected to the first circuit board (51), the driving component (13) of the first switch module (10a) and the driving component (13) of the second switch module (10b).

4. The circuit breaker (100) according to claim 3, **characterized by** further comprising:
a first position detection assembly (60a) coupled to the first switch module (10a) and electrically connected to the first circuit board (51), the first position detection assembly (60a) being adapted to detect positions of the plurality of connecting members (15) of the first switch module (10a); and
a second position detection assembly (60b) coupled to the second switch module (10b) and electrically connected to the first circuit board (51), the second position detection assembly (60b) being adapted to detect positions of the plurality of connecting members (15) of the second switch module (10b).

5. The circuit breaker (100) according to claim 4, **characterized in that** each of the first switch module (10a) and the second switch module (10b) further comprises a moving part (14) coupled to the plurality of connecting members (15); each of the first position detection assembly (60a) and the second position detection assembly (60b) comprises a third circuit board (61) and a micro switch (62) disposed on the third circuit board (61), the third circuit board (61) is electrically connected to the first circuit board (51), and the micro switch (62) is adapted to detect a position of a corresponding moving part (14).

6. The circuit breaker (100) according to any of claims 1 to 5, **characterized by** further comprising:
a plurality of solid-state switch units (70) electrically connected to the plurality of second contacts (12) of the first switch module (10a) and the plurality of second wiring terminals (22), respectively.

7. The circuit breaker (100) according to claim 6, **characterized by** further comprising:
a supporting member (80) supporting the first switch module (10a) and the second switch module (10b).

8. The circuit breaker (100) according to claim 7, **characterized by** further comprising:
a heat dissipation member located on a side of the plurality of solid-state switch units (70) away from the supporting member (80) and coupled to the supporting member (80); and
an insulating member disposed between the heat dissipation member and the plurality of solid-state switch units (70).

9. The circuit breaker (100) according to claim 8, **characterized in that** a plurality of ribs (81) are provided on a side of the supporting memeber (80) facing the plurality of solid-state switch units (70), and the plurality of ribs (81) abut against the plurality of solid-state switch units (70), so that the plurality of solid-state switch units (70) abut against the insulating member.

10. The circuit breaker (100) according to any of claims 2 to 5, **characterized by** further comprising:
a housing (90) disposed around the first switch module (10a), the second switch module (10b), the plurality of first wiring terminals (21), and the plurality of second wiring terminals (22), and comprising a plurality of first through holes (91), a plurality of second through holes (92), and a third through hole (93), the plurality of first through holes (91) corresponding to positions of the plurality of first wiring terminals (21), the plurality of second through holes (92) corresponding to positions of the plurality of second wiring terminals (22), and the test button assembly (40) passing through the third through hole (93).

11. The circuit breaker (100) according to claim 10, **characterized in that** the driving component (13) of the first switch module (10a) comprises an operation part (131) for a user to operate, and the housing (90) further comprises a fourth through hole (94) through which the operation part (131) passes.
